# EUROPÄISCHE PATENTSCHRIFT

(11) **EP 1 276 088 B1**
(45) Veröffentlichungstag und Bekanntmachung des Hinweises auf die Patenterteilung: **29.09.2010**
(21) Anmeldenummer: 02015159.3
(22) Anmeldetag: 06.07.2002
(51) Int. Cl.: H04H 20/00

(54) **Verfahren zur positionsbezogenen Ausgabe von Bild- und/oder Tonbeiträgen in einem Fahrzeug**
Method for position-related output of image or acoustic signals in a vehicle
Procédé d'affichage de signaux visuels ou acoustiques relatif à la position dans un véhicule

(30) Priorität: 14.07.2001 DE 10134333
(43) Veröffentlichungstag der Anmeldung: 15.01.2003
(73) Patentinhaber: ROBERT BOSCH GMBH, 70442 Stuttgart (DE)
(72) Erfinder: Messerschmidt, Rudolf, 31079 Sibbesse (DE); Petersen, Detlev, 31139 Hildesheim (DE); Tostmann, Jens, 30880 Laatzen (DE); Dierkes, Volkmar, 31180 Giesen (DE)

(56) Entgegenhaltungen:
- EP-A- 1 035 532
- EP-A- 1 069 714
- WO-A-01/03075
- WO-A-91/14247
- WO-A-98/08206

## Beschreibung

Die Erfindung betrifft ein Verfahren zur positionsbezogenen Ausgabe von Bild- oder Tonbeiträgen in einem Fahrzeug auf zumindest einer Wiedergabeeinrichtung, insbesondere in Fahrzeugen des öffentlichen Personenverkehrs, gemäß dem Oberbegriff des Anspruches 1 und ein Computerprogramm zur Durchführung des Verfahrens.

Aus dem Stand der Technik ist die Übermittlung von Nachrichten bzw. Werbe- oder sonstigen Beiträgen über Digital Audio Broadcasting (DAB) in Fahrzeuge bekannt. Die Beiträge werden durch Ortsparameter gekennzeichnet, wobei die Ortsparameter insbesondere Angaben zu Haltestellen, Routen, Linien und Fahrtrichtung des Fahrzeuges enthalten. In dem Fahrzeug werden die Beiträge auf Displayeinheiten oder Multimediasystemen dargestellt, wobei es hier erforderlich ist, dass die Ortsparameter des Fahrzeuges mit den Ortsparametern der Beiträge übereinstimmen. Die Ortsparameter des Fahrzeuges werden mit einer hardwaregesteuerten Positionsschnittstelle, z. B. eine Schnittstelle zu einem integrierten Bordinformationssystem (IBIS), das von dem Verband Deutscher Verkehrsbetriebe (VDV) spezifiziert wurde, zur Verfügung gestellt, indem dem Fahrzeug beim Passieren einer Haltestelle ein bestimmtes Signal über einen Kontakt übermittelt wird. Ein entsprechender Bordrechner erfasst auf der Basis des Fahrplanes und des Haltestellensignals den aktuellen Standort des Fahrzeuges und gibt beispielsweise die Bezeichnung der Haltestelle aus.

Voraussetzung für eine solche Art der positionsbezogenen Ausgabe von Beiträgen ist demnach das Vorhandensein einer Positionsschnittstelle und eines entsprechenden im Fahrzeug installierten Bordrechners.

Aus,der WO 91/14247 ist ein Kommunikations- und Anzeigesystem für Massenverkehrsmittel bekannt, bei dem Informationen für Fahrzeuge aktualisiert werden. Das System weist eine Vielzahl von Aktualisierungsübertragungsstationen auf, um entlang einer Fahrroute Informationsaktualisierungen von einem zentralen Leitzentrum zu übertragen, wenn die Fahrzeuge an den Stationen vorbeifahren. Empfänger in den Fahrzeugen empfangen die Informationen und zeigen diese auf Anzeigen im Fahrzeug an. Die Information kann routenspezifische Werbung, Nachrichten, Wetterinformation oder Verkehrsinformation sein. Das System weist ferner Stoppstellen auf, an denen dem Sender signalisiert wird, dass dieser in den Fahrzeugen Werbung bezüglich des speziellen Routenhalts anzeigen soll, die in Abhängigkeit von Codes, die vom Sender empfangen werden ausgewählt werden , mit denen der Halteort identifiziert wird.

Aus der EP 1069 714 A1 ist ein Verfahren zum Empfang von digitalen Signalen über ein Funknetz bzw. eine Empfangsvorrichtung für über Funkkanäle übertragene digitale Signale vorgeschlagen, die dazu dienen, die über ein Funknetz empfangenen Informationen standortabhängig darzustellen. Verfahren und Empfangsvorrichtung gestatten die Differenzbildung zwischen den Ortskoordinaten der übertragenen Information und dem Standort der Empfangsvorrichtung. Liegt die Differenz unterhalb einer vorgegebenen Schwelle, wird die Information optisch und/oder akustisch dargestellt.

Aus der WO 98/08206 ist ein System bekannt, das wartenden Passagieren eines Verkehrsmittels den Status des Verkehrsmittels, umfassend die noch zu wartende Wartezeit anzeigt. Die Verkehrsmittel weisen GPS-Empfänger auf, mit denen deren Position auf der jeweiligen Fahrtroute bestimmt wird. Eine zentrale Leitstelle erhält die Positionsinformationen und errechnet aufgrund deren Position, Route und Fahrplan die Ankunftszeiten an den Haltestellen, Verbindungen und Wartezeiten bis zum Eintreffen. Diese Daten werden mit Werbung und Nachrichten in Abhängigkeit des Datums, der Tageszeit, des Wetters etc. an den Haltestellen angezeigt und für tragbare Endgeräte den Fahrgästen und wartenden Personen verfügbar gemacht.

Aus der EP 1 035 532 A1 eine Vorrichtung zur Anzeige von Informationsdaten in einem oder über ein Fahrzeug, insbesondere einem Zug bekannt. Die Anzeigeinheit weist verschiedene Anzeigebereiche auf, in denen verschiedenartige Informationsdaten angezeigt werden. Mittels einer Rechnereinheit wird eine ereignisgesteuerte Umschaltung des Anzeigeinhalts vorgenommen. Dies ermöglicht eine flexible und aktualisierte Informationsübermittlung.

Aufgabe der vorliegenden Erfindung ist es, ein Verfahren bereitzustellen, mit dem eine positionsbezogene Ausgabe von Beiträgen in einem Fahrzeug auch ohne eingebaute Positionsschnittstelle und aufwendiges Errechnen der eigenen Position möglich ist.

Erfindungsgemäß wird diese Aufgabe durch ein Verfahren mit den Merkmalen des Anspruchs 1 und ein Computerprogramm zur Durchführung des Verfahrens gelöst.

Durch die Übermittlung von Positionsinformationen des jeweiligen Fahrzeuges über eine Funkschnittstelle an das Fahrzeug entfällt die Notwendigkeit einer entsprechenden Positionsschnittstelle. Darüber hinaus ist keine Nachrüstung oder zusätzliche Verkabelung einer solchen Positionsschnittstelle erforderlich, da bereits vorhandene Funkschnittstellen mitgenutzt werden können. Eine solche Funkschnittstelle ist insbesondere eine DAB-Schnittstelle, bei der sowohl die darzustellenden Beiträge als auch die Positionsdaten.über ein und dieselbe Schnittstelle übertragen werden können. Aufgrund der Positionsdaten der Fahrzeuge werden entweder bereits in dem Fahrzeug gespeicherte oder zwischengespeicherte Beiträge abgerufen und in Abhängigkeit von der gegenwärtigen Position des Fahrzeuges abgespielt oder ein Beitrag wird aufgrund der Positionsinformation generiert und anschließend ausgegeben. Letzteres in insbesondere dann der Fall, wenn aufgrund der Positionsinformation aus mehreren vorliegenden Einzelbeiträgen ein Gesamtbeitrag erstellt wird.

Neben der reinen Darstellung der eigenen Position des Fahrzeuges und einer entsprechenden Aussendung bzw. Wiedergabe positionsbezogener Beiträge ist vorgesehen, dass Positiönsinförmationen anderer bzw. mehrerer Fahrzeuge in ein bzw. jedes Fahrzeug übermittelt werden und dass diese Positionsinformationen aufbereitet als Beiträge ausgegeben werden. Dies bedeutet, dass der gegenwärtige Aufenthaltsort verschiedener Fahrzeuge auf entsprechenden Wiedergabeeinrichtungen ausgegeben werden kann. Ein Zugbenutzer kann somit neben dem momentanen eigenen Standort feststellen, wo sich Anschlusszüge befinden, so dass gegebenenfalls eine Änderung der Fahrplanung vorgenommen werden kann. Ebenfalls können diese Informationen zur Darstellung eines grafischen Linienverlaufs genutzt bzw. können die Positionen der Fahrzeuge auf einer Karte angezeigt werden. Ebenfalls ist es möglich, dass Umstiegs-, Anschluss- oder Störinformationen des eigenen Fahrzeuges bzw. anderer Fahrzeuge ausgegeben werden, um den Fahrzeugnutzer möglichst umfassend zu informieren.

Um bereits vorliegende Daten ausnutzen zu können, ist die Verwendung von Positionsinformationen von Fahrzeugen vorgesehen, die in einem Verkehrsleitsystem erfasst sind. Ein Systemrechner stellt die jeweiligen. Positionsinformationsdaten der Fahrzeuge der entsprechenden Einrichtung zur Verfügung, die dann diese Positionsinformationen an das jeweilige Fahrzeug übermittelt. So können bereits erfasste Daten, wie sie z. B. dem Zugverkehr oder im öffentlichen Personennahverkehr vorliegen, einer weiteren Nutzung zugeführt werden.

Alternativ zu einer Nutzung der Daten eines Verkehrsleitsystems, wie es beim Schienenverkehr oder auch ansatzweise beim Busverkehr eingesetzt wird, können auch dezentrale Positionsermittlungseinrichtungen wie Ortung über das Mobilfunknetz eingesetzt werden, um die gegenwärtige Position des Fahrzeuges zu bestimmen. Nachteilig an GPS ist die eingeschränkte Nutzbarkeit bei Sichtbehinderung auf die erforderlichen Satelliten, jedoch können so individuell und unabhängig von einer zentralen Einrichtung entsprechende Beiträge positionsbezogen abgespielt bzw. ausgegeben werden. Die Positionsermittlung und die Auswahl der darzustellenden Beiträge erfolgt im Gegensatz zu dem GPS-Verfahren durch wenig rechenintensives Vergleichen, während bei dem GPS-Verfahren der Abgleich der Soll- mit der Ist-Position wesentlich aufwendiger ist, da z.B. die Erdkrümmung und der Breitengrad in die Berechnung einbezogen werden muß, ob die Ist-Position innerhalb eines Radiusses r um die Soll-Position liegt.

Zur Gewährleistung einer entsprechenden Aktualität der Beiträge bzw. der übermittelten Positionsinformationen des jeweiligen Fahrzeuges ist vorgesehen, dass die Positionsinformationen periodisch an das jeweilige Fahrzeug übermittelt werden. Eine entsprechende Übermittlung in einer Wiederholrate von 1 Sekunde oder geringer gewährleistet ein ausreichendes Maß an Aktualität, wobei eine Verwendung überalterter Positionsdaten durch eine entsprechende Programmierung ausgeschlossen werden kann. Beispielsweise ist vorgesehen, dass Positionsinformationen, die älter als 1 Minute sind, nicht mehr verwendet werden. Die Wiederholrate und damit die Aktualisierung kann an die Genauigkeit der Positionsinformationen gekoppelt werden, so dass auch größere Zeitabstände möglich sind.

Zweckmäßigerweise werden die Positionsinformationen über ein digitales Sendeverfahren an das jeweilige Fahrzeug übermittelt, wobei die Positionsinformationen gemeinsam mit den auszugebenden Beiträgen an das Fahrzeug von einem Digital-Multimedia-Broadcasting (DMB)-Sender gesendet werden. Alternativ dazu ist vorgesehen, dass Beiträge und Positionsinformationen separat an das jeweilige Fahrzeug übermittelt werden, um so die Datenströme voneinander zu trennen. Auf diese Art und Weise ist es möglich, die Daten für die Beiträge vorab an das Fahrzeug zu übermitteln und erst auf das entsprechende Positionsinformationssignal hin abzurufen bzw. auszugeben. In den jeweiligen Fahrzeugen sind dann entsprechende Speicher vorgesehen, in denen die empfangenen Beiträge ablegt bzw. zwischengespeichert werden können.

Mit dem digitalen Übertragungsverfahren ist zudem eine Priorisierung der gesendeten Daten möglich, so daß bestimmt Daten vordringlich gesendet bzw. empfangen werden können. Dies ist insbesondere dann vorteilhaft, wenn die Beiträge ebenfalls über eine Sendeeinrichtung an das Fahrzeug übermittelt wird. So können die stets aktuell zu übermittelnden Positionsinformationen immer gesendet werden, während bei einer Übertragungspause die Beiträge aktualisiert oder vervollständigt werden

Vorteilhafterweise werden die Positionsinformationen in eine Positionsliste übertragen, die periodisch, beispielsweise alle 0,2 Sekunden aktualisiert wird. Auf diese Weise wird sichergestellt, dass stets aktuelle Positionsinformationen an die Fahrzeuge übermittelt werden. Die Positionsliste enthält dabei die Informationen über die Position aller relevanten Fahrzeuge, also nicht nur die Position eines Fahrzeuges. Die jeweils zutreffende Positionsinformation für ein bestimmtes Fahrzeug wird anhand einer Fahrzeugidentifizierungsnummer in dem jeweiligen Fahrzeug sehr einfach aus dem Vergleich der Fahrzeugidentifizierungsnummer mit der Positionsliste ohne aufwendige Rechenoperation in einem in dem Fahrzeug installierten DMB-Server selbst ermittelt. Anhand der Positionsinformation erfolgt dann eine Auswahl bezüglich der auszugebenden Beiträge.

In einem alternativen Verfahren zur positionsbezogenen Ausgabe von Bild- oder Tonbeiträgen werden die Positionsinformationen zumindest eines Fahrzeuges an eine zentrale Erfassungsstelle übermittelt, beispielsweise an ein Verkehrsleitsystem. Aufgrund der Positionsinformationen des jeweiligen Fahrzeuges wird ein Beitrag über eine Funkschnittstelle an das Fahrzeug übermittelt und indem Fahrzeug über Wiedergabeeinrichtungen ausgegeben. Die gezielte positionsbezogene Übermittlung eines bestimmten Beitrages an ein bestimmtes Fahrzeug benötigt einen minimalen Geräteaufwand seitens des Fahrzeuges, nämlich nur Empfänger und Wiedergabeeinrichtung, wobei die Funkschnittstelle bei den meisten Fahrzeugen bereits vorhanden ist. Eine aufwendige Umrüstung und Ausstattung mit einem leistungsstarken Bordrechner ist nicht notwendig. Ebenfalls können die auszugebenden Beiträge redaktionell einfach angepaßt und aktualisiert werden, ohne alle in dem Fahrzeug gespeicherte Daten zwangsläufig verändern zu müssen.

Um eine entsprechend exakte Zuordnung der Beiträge zu den jeweiligen Fahrzeugen zu erreichen ist eine.periodische Übermittlung an die.Erfassungsstelle und somit Aktualisierung der Positionsinformationen vorgesehen. Um die Beiträge an das "richtige" Fahrzeug zu senden, also an dasjenige Fahrzeug, das sich auf der entsprechenden Position befindet, ist der Einsatz eines digitalen Sendeverfahrens zur Übermittlung der Beiträge an das Fahrzeug vorgesehen, da durch dieses Verfahren einfach eine Adressierung der Beiträge vorgenommen werden kann. Es werden dann von den Fahrzeugen bzw. von dem Fahrzeug nur derjenige Beitrag ausgegeben, der eine entsprechende Kennung, z.B. die Fahrzeugidentifizierungsnummer, aufweist. Die anderen Beiträge sind entsprechend nicht für das Fahrzeug vorgesehen und bleiben unberücksichtigt.

Um eine zuverlässige und qualitativ hochwertige Übertragung zu gewährleisten ist die Sendung der Beiträge mittels eines DMB-Senders an das Fahrzeug vorgesehen. Ein dem Sender zugeordneter DMB-Server trifft dabei zentral anhand der Positionsinformation des Fahrzeuges bzw. der Fahrzeug die Auswahl bezüglich der zu sendenden und damit auszugebenden Beiträge. Neben den Beiträgen können auch Positionsinformationen anderer Fahrzeuge übermittelt werden

Die Ausgabe der Beiträge bzw. der aufbereiteten Positiönsinformationen erfolgt über geeignete Wiedergabeeinrichtungen, insbesondere Multimediasysteme, mit denen sowohl Ton- als auch Bildbeiträge an den Fahrzeugnutzer ausgegeben werden können

Alternativ zu der Ausgabe an entsprechende Wiedergabeeinrichtungen ist es möglich, dass diese Beiträge oder Positionsinformationen über Schnittstellen an mobile Endgeräte wie z. B. mobile Telefone, Laptops oder elektronische Organizer ausgegeben werden. Diese mobilen Endgeräte können die Beiträge bzw. Positionsinformationen z.B. über Infrarotschnittstellen oder Bluetooth erhalten und entsprechend weiterverarbeiten.

Weiterhin ist ein Computerprogramm mit Programmcodemitteln zur Durchführung der Verfahren nach einem der vorhergehenden Ansprüche vorgesehen, wenn das Programm aus einer Rechnereinheit ausgeführt wird. Dabei sind die Programmcodemittel auf einem computerlesbaren Datenträger gespeichert.

Es werden Ausführungsbeispiele des Erfindung näher erkäutert.

Es ist eine Sendeeinrichtung vorgesehen, an die ein Verkehrsleitsystem und eine Speichereinrichtung angeschlossen sind und die entsprechenden Informationen an die Sendeeinrichtung übermitteln. Das Verkehrsleitsystem enthält Informationen über die Position insbesondere von Fahrzeugen des öffentlichen Personenverkehrs, wie z. B. von Zügen, Straßenbahnen oder Omnibussen. Alternativ zu einem Verkehrsleitsystem für den öffentlichen Personenverkehr ist es möglich, durch die Erfassung entsprechender Daten für Lastkraftwagen oder Personenkraftwagen mittels einer Sendeeinrichtung und GPS auch entsprechende Positionsinformationen für private bzw. gewerbliche Fahrzeuge bereitzustellen. An dieses Verkehrsleitsystem werden die entsprechenden Informationen über die Position des jeweiligen Fahrzeuges auf bekannte Art und Weise übermittelt, beispielsweise über Mobilfunk oder Kabelnetze. Die jeweiligen Fahrzeuge sind mit einer Identifizierungsnummer versehen, so dass die jeweils gegenwärtige Position des Fahrzeuges eindeutig ermittelt werden kann.

Ebenfalls dem Sender zugeordnet ist eine Speichereinrichtung, in der die zu sendenden bzw. an Fahrzeuge zu übermittelnde Beiträge in Form von Dateien abgelegt sind. Die Positionsinformationen aus dem Verkehrsleitsystem und die Dateien der Beiträge aus der Speichereinrichtung werden dem Sender zugeführt, der diese gemeinsam in einem digitalen Sendeverfahren an alle Fahrzeuge mit einer entsprechenden Funkschnittstelle übermittelt. Diese Schnittstelle ist beispielsweise als DAB-Funkschnittstelle ausgebildet.

An alle Fahrzeuge werden somit ein kompletter Satz an Positionsinformationen und Dateien bezüglich der Beiträge übermittelt, so dass alle Fahrzeuge über den gleichen Datenbestand verfügen. In jedem Fahrzeug ist dezentral ein Server installiert, der anhand der Fahrzeugidentifikationsnummer, die dem Server vorliegt, aus der Positionsliste die gegenwärtige Position des Fahrzeuges ermittelt und anhand dieser Position den entsprechenden Beitrag auswählt. Der Beitrag wird dann für das entsprechende Multimediasystem freigeschaltet und an den Fahrgast bzw. Fahrzeugnutzer in Gestalt von Standbildern, Videosequenzen und/oder Tonbeiträgen ausgegeben. In jedem Fahrzeug ist somit neben einer Empfangseinrichtung auch ein entsprechender Server installiert, durch den eine Auswahl getroffen wird, was in welchem Fahrzeug wo gesendet wird. Es handelt sich somit nicht um eine starre Ablaufsteuerung eines vorgefertigten Programmes, sondern in einer flexiblen Ausstrahlung der jeweiligen Informationen in Abhängigkeit von dem gegenwärtigen Standort des Fahrzeuges, ohne dass eine entsprechende Fahrzeugausstattung mit einem IBIS-Bus vorhanden sein muss. Durch das Verfahren kann sehr flexibel auf individuelle Variationen reagiert werden bzw. können unvorhergesehene Störungen in dem Betriebsablauf, wie z.B. aufgrund von Unfällen, Stromausfall oder Umleitungen bei der entsprechenden Informationsausgabe berücksichtigt werden.

Die auf den Multimediasystemen auszugebenden Beiträge können zunächst die Positionsinformation des jeweiligen Fahrzeugs selbst enthalten, darüber hinaus ist auch vorgesehen, Werbung, Nachrichten, allgemeine Verkehrsinformationen oder insbesondere für den öffentlichen Personennahverkehr Haltestellenzusatzinformationen, Zugverbindungen oder Anschlüsse auszugeben. In dem jeweiligen dezentralen Server können auch Stamminformationen wie der Fahrplan abgelegt werden, so dass neben den vorgenannten Informationen der Fahrgast zudem darüber informiert werden kann, wo sich die nächste Haltestelle befindet und wann diese voraussichtlich erreicht wird. Für den privaten Fahrzeugverkehr können positionsabhängige Staumeldungen und Darstellungen von Umleitungen auf dem jeweiligen Multimediasystem ausgegeben werden

Dies ist insbesondere durch die Einbeziehung der Positionsinformationen anderer an dem Verkehrsleitsystem angeschlossener Fahrzeuge möglich, indem beispielsweise erhöhtes Fahrzeugaufkommen festgestellt werden kann und dieses Fahrzeugaufkommen entsprechend eingeordnet wird. Befindet sich beispielsweise ein Stau auf einer vorher eingegebenen Route, so können positionsabhängig Alternativen in der Streckenführung auf dem Multimediasystem ausgegeben werden.

Neben einem Server sind in jedem Fahrzeug Speichermedien vorhanden, auf denen die Beiträge, die von der Sendeeinrichtung an die Fahrzeuge übermittelt werden, abgespeichert werden. Durch die Speicherung der Beiträge in einem Fahrzeug wird vermieden, dass bei einer Funkstörung die Übertragung zu den Fahrzeugen bzw. die Übertragung an die Server und damit die Ausgabe über die Multimediasysteme unterbrochen wird. Ebenfalls ist so möglich, in jedem Fahrzeug ein bestimmtes Grundprogramm abzuspeichern, das beispielsweise aus der Fahrtroute oder einem Fahrplan besteht, und das im Falle einer Unterbrechung der Übertragung von der Sendeeinrichtung zu dem Fahrzeug automatisch auf dem Multimediasystem ausgegeben wird. Ebenfalls auf dem Speicher bzw. auf dem Server können Konsistenzbedingungen abgelegt werden; so z. B. eine Unverträglichkeitsbedingung zwischen zwei Beiträgen oder ein festgelegter Ablauf oder eine festgelegte Abfolge von Beiträgen, so dass beispielsweise ein Beitrag A die Einleitung zu Beitrag B bildet. Die Beiträge können entweder aus Standbildern, Videosequenzen und/oder Tönbeiträgen bestehen.

Gemäß einer anderen Ausgestaltung der Erfindung ist an die Sendeeinrichtung ein zentraler Server angeschlossen, der bereits auf der Senderseite eine Auswahl der zu übermittelnden Informationen und Beiträge vornimmt. So ist es vorgesehen, dass in dem zentralen Server ein Beitrag mit einer entsprechenden Identifizierungsnummer versehen wird, die mit einer Fahrzeugidentifizierungsnummer korrespondiert und die bestimmte Positionsinformationen und bestimmte Beiträge diesem Fahrzeug zuordnet.

Im Gegensatz zu der erstgenannten Ausgestaltung erforgt gemäß der zweitgenannten Ausgestaltung eine selektierte Übermittlung an Positionsinformationen und Beiträgen mit einer senderseitigen Auswahl und Zuordnung. Fahrzeugseitig ist lediglich ein Empfänger notwendig, der die entsprechende Identifizierung des Fahrzeuges erkennen kann und die Beiträge an ein Multimediasystem ausgibt. Die Fahrzeugidentifizierungsnummer funktioniert ähnlich einer Telefonnummer, so dass gezielt ein entsprechendes Fahrzeug mit den jeweiligen Positionsinformationen und Beiträgen versehen werden kann. Durch diese Regelung ist es nicht erforderlich, jedes Fahrzeug mit einem Server zu versehen, da ein zentraler Server die Auswahl übernimmt. Durch die digitale Übersendung der Positionsinformationen und der Beiträge ist es möglich, einerseits an alle angeschlossenen bzw. alle erreichbaren Fahrzeuge sämtliche Positionsinformationen und Beiträge zu übersenden oder alternativ eine Selektion über Adressen vorzunehmen, so dass nur spezielle Positiofisinformationen und Beiträge an das jeweilige Fahrzeug übermittelt werden.

Während insbesondere bei schienengebundenem Verkehr eine Positionsbestimmung und Übermittlung der entsprechenden Position eines Zuges über Kontakte, Lichtschranken oder Induktionsschleifen erfolgen kann, ist bei straßengebundenen Fahrzeugen die Ermittlung über ein Mobiltelefon möglich.

Sofern ein dezentraler Server in dem Fahrzeug eingesetzt wird, ermittelt dieser die jeweilige Position des Fahrzeuges und anhand der vorhandenen Informationen über die Position der anderen Fahrzeuge, insbesondere Züge, Straßenbahnen oder Busse, kann auf einer Karte die jeweilige Position aller Züge und Straßenbahnen bzw. Omnibusse ausgegeben werden. Auf diese Weise lässt sich grafisch darstellen, wo sich die Fahrzeuge in einem bestimmten Gebiet befinden bzw. in welcher Richtung sie sich bewegen. Dadurch ist es möglich, Anschlussmöglichkeiten oder Umsteigemöglichkeiten zu optimieren und die weitere Reiseplanung diesbezüglich einzurichten.

Ebenso ist.es möglich, die Information über geeignete Schnittstellen mobilen Endgeräten zur Weiterverarbeitung zur Verfügung zu stellen.

Insbesondere bei einer dezentralen Anordnung der Server ist es vorteilhaft, wenn die Positionsinformationen in einer periodisch aktualisierten Datei abgelegt werden. Mit jeder Aktualisierung der Datei ändert sich deren Modifizierungsdatum und in dem Server wird überwacht, ob die Datei aktualisiert wurde und ob sich das Modifizierungsdatum dieser Datei in einem vorgegebenen Zeitraum befindet, beispielsweise 1 Minute älter als die gegenwärtige Systemzeit.

## Patentansprüche

1. Verfahren zur positionsbezogenen Ausgabe von Bild- und/oder Tonbeiträgen in einem Fahrzeug mit mindestens einer Wiedergabeeinrichtung, bei dem aktuelle Positionsinformationen über den Standort zumindest des jeweiligen Fahrzeuges über eine Funkschnittstelle an das Fahrzeug übermittelt werden und in dem Fahrzeug in Abhängigkeit der Positionsinformationen der auszugebende Beitrag aus in dem Fahrzeug gespeichert vorliegenden Beiträgen ausgewählt wird, wobei die Positionsinformationen in einer Positionsliste übertragen werden, die periodisch aktualisiert und die Positionsliste die Position aller von einem Verkehrsleitsystem erfassten Fahrzeuge enthält, **dadurch gekennzeichnet, dass** die jeweils zutreffende Positionsinformation anhand einer Fahrzeugidentifizierungsnummer in dem jeweiligen Fahrzeug in einem DMB-Server ermittelt wird, wobei die Auswahl bezüglich der auszugebenden Beiträge der DMB-Server trifft und dass die Positionsinformationen mit einer höheren Priorisierung als die Beiträge zusammen oder separat mit den Beiträgen von einem DMB-Sender an das Fahrzeug gesendet werden.

2. Verfahren nach Anspruch 1, **dadurch gekennzeichnet, dass** die Positionsinformationen aller von einem Verkehrsleitsystem erfassten Fahrzeuge über die Funkschnittstelle an das Fahrzeug übermittelt werden, dass aus diesen Positionsinformationen ein Beitrag generiert und dieser in dem Fahrzeug wiedergeben wird.

3. Verfahren nach Anspruch 1 oder 2, **dadurch gekennzeichnet, dass** die Positionsinformationen der Fahrzeuge von einem Verkehrsleitsystem-Rechner.

4. Verfahren nach einem der voranstehenden Ansprüche, **dadurch gekennzeichnet, dass** die Positionsinformationen periodisch an das Fahrzeug übermittelt werden.

5. Verfahren nach einem der voranstehenden Ansprüche, **dadurch gekennzeichnet, dass** die Positionsinformationen oder Beiträge über ein digitales Sendeverfahren an das Fahrzeug übermittelt werden.

6. Computerprogramm mit Programmcodemitteln zur Durchführung der Verfahren nach einem der vorhergehenden Ansprüche, wenn das Programm auf einer Rechnereinheit ausgeführt wird.

7. Computerprogramm mit Programmcodemitteln gemäß Anspruch 6, die auf einem computerlesbaren Datenträger gespeichert sind.

## Claims

1. Method for the position-oriented output of picture and/or sound items in a vehicle with at least one reproduction device, in which current position information about the location of at least the respective vehicle is transmitted to the vehicle via a radio interface and the item to be output is selected in the vehicle from items which are present in the vehicle in stored form on the basis of the position information, wherein the position information is transmitted in a position list which is periodically updated and the position list contains the position of all the vehicles covered by a traffic control system, **characterized in that** the respective relevant position information is ascertained from a vehicle identification number in the respective vehicle in a DMB server, wherein the selection regarding the items to be output is made by the DMB server, and **in that** the position information is sent from a DMB transmitter to the vehicle with higher prioritization than the items separately or together with the items.

2. Method according to Claim 1, **characterized in that** the position information for all the vehicles covered by a traffic control system is transmitted to the vehicle via the radio interface, **in that** said position information is used to generate an item, and said item is reproduced in the vehicle.

3. Method according to Claim 1 or 2, **characterized in that** the position information for the vehicles is provided by a traffic control system computer.

4. Method according to one of the preceding claims, **characterized in that** the position information is transmitted to the vehicle periodically.

5. Method according to one of the preceding claims, **characterized in that** the position information or items is/are transmitted to the vehicle using a digital transmission method.

6. Computer program with program code means for carrying out the methods according to one of the preceding claims when the program is executed on a computer unit.

7. Computer program with program code means according to Claim 6 which are stored on a computer-readable data storage medium.

## Revendications

1. Procédé de production en fonction de la position de contribuants visuels et/ou sonores dans un véhicule avec au moins un dispositif de reproduction, selon lequel des informations de position actuelles sur le lieu d'au moins le véhicule concerné sont communiquées au véhicule par le biais d'une interface hertzienne et le contribuant à produire est sélectionné dans le véhicule en fonction des informations de position parmi les contribuants présents mémorisés dans le véhicule, les informations de position étant transmises dans une liste de positions qui est actualisée périodiquement et la liste de positions contenant la position de tous les véhicules détectés par un système de contrôle du trafic, **caractérisé en ce que** l'information de position pertinente respective est déterminée au moyen d'un numéro d'identification de véhicule dans le véhicule correspondant dans un serveur DMB, la sélection relative aux contribuants à produire affectant le serveur DMB, et que les informations de position ayant un niveau de priorité plus élevé que les contribuants sont envoyées d'un émetteur DMB au véhicule conjointement avec les contribuants ou séparément de ceux-ci.

2. Procédé selon la revendication 1, **caractérisé en ce que** les informations de position de tous les véhicules détectés par un système de contrôle du trafic sont communiquées au véhicule par le biais d'une interface hertzienne, qu'un contribuant est généré à partir de ces informations de position et celui-ci est restitué dans le véhicule.

3. Procédé selon la revendication 1 ou 2, **caractérisé en ce que** les informations de position des véhicules sont mises à disposition par un ordinateur du système de contrôle du trafic.

4. Procédé selon l'une des revendications précédentes, **caractérisé en ce que** les informations de position sont communiquées périodiquement au véhicule.

5. Procédé selon l'une des revendications précédentes, **caractérisé en ce que** les informations de position ou les contribuants sont communiqués au véhicule par le biais d'un procédé d'émission numérique.

6. Programme informatique comprenant des moyens de code de programme pour mettre en oeuvre un procédé selon l'une des revendications précédentes lorsque le programme est exécuté sur une unité de calcul.

7. Programme informatique comprenant des moyens de code de programme selon la revendication 6, qui est enregistré sur un support de données lisible par un ordinateur.
